# EUROPÄISCHE PATENTANMELDUNG

(11) **EP 4 201 716 A1**
(43) Veröffentlichungstag der Anmeldung: **28.06.2023**
(21) Anmeldenummer: 22209189.4
(22) Anmeldetag: 23.11.2022
(51) Int. Cl.: B60G 13/00

(54) **BAUGRUPPE MIT VERSCHRAUBUNG**

(30) Priorität: 01.12.2021 DE 102021131665
(71) Anmelder: Vibracoustic SE, 64293 Darmstadt (DE)
(72) Erfinder: Kardoes, Hilrich, 21423 Winsen (DE); Werner, Dr. Philipp, 21339 Lüneburg (DE); Geslain, Antoine, 44300 Nantes (FR)
(74) Vertreter: Patentanwälte Olbricht Buchhold Keulertz

(57) **Zusammenfassung**

Vorgeschlagen wird eine Baugruppe, durch welche eine Zentrallängsachse (Z) ragt, umfassend ein Gehäuse (4), umfassend ein erstes Gehäuseteil (100) mit einem ersten Gewinde (102), welches ein erstes Gewindeprofil (104) umfasst, und ein zweites Gehäuseteil (200) mit einem zweiten Gewinde (202), welches ein zweites Gewindeprofil (204) umfasst, wobei die Gehäuseteile (100, 200) über die Gewinde (102, 202) unter Ausbildung einer Verschraubung (6) miteinander verschraubt sind, wobei das erste Gewinde (102) ein Außengewinde und das zweite Gewinde (202) ein Innengewinde ist, wobei das erste Gehäuseteil (100) ein Deckel und das zweite Gehäuseteil (200) eine Aufnahme ist, wobei das zweite Gehäuseteil (200) einen Durchbruch (240) an der dem ersten Gehäuseteil (100) gegenüberliegenden Seite aufweist, ausgebildet zum Einführen eines Stoßdämpfers oder dessen Stange.

## Beschreibung

Die Erfindung betrifft eine Baugruppe gemäß dem Oberbegriff von Anspruch 1.

Es sind aus der Praxis Baugruppen bekannt, beispielsweise Topmounts, Stoßdämpfertöpfe oder Aggregatlager, wie Motorlager.

In einer bekannten Baugruppe erster Ausführung wird von unten her bzw. von einer Straßenseite her, bezogen auf die Einbaustellung, wo ein Jouncebumper angeordnet ist, ein Einsatz als Lagerfixiereinrichtung in das obere karosserieseitige Topmountgehäuse in der Art eingeschraubt, dass es den Hohlraum, in dem ein Elastomerlager sitzt, von unten her schließt. Das eingeschraubte Bauteil bildet eine Trennwand zwischen Elastomerlager und Jouncebumper und weist zentral eine Durchgangsöffnung auf, durch welche eine Dämpferstange durchgeführt werden kann. Die Dämpferstange ist mit dem Kern des Elastomerlagers verschraubt. Beim Einfedern wird der Jouncebumper zusammengepresst und hierdurch die Trennwand nach oben belastet und dabei elastisch verformt. Beim Ausfedern zieht die Dämpferstange am Kern des Elastomerlagers, wodurch das Elastomerlager nach unten gerichtete Kräfte auf die Trennwand ausübt. Diese entgegengerichteten Lasten werden über die Gewindegänge der Verschraubung der Lagerfixiereinrichtung in das Topmountgehäuse abgeleitet. Das Gewinde erfährt folglich entgegengesetzte, schwingende Kräfte, wodurch es sich lösen kann. Außerdem sind in vielen Anwendungen die nach oben gerichteten Jouncebumperkräfte wesentlich größer, als die nach oben gerichteten Kräfte des Lagers.

In einer bekannten Baugruppe zweiter Ausführung können, um ein Lösen der Verschraubung zu unterbinden, an der Lagerfixiereinrichtung Rasthaken vorgesehen werden. Allerdings ist mit dieser Lösung ein Lösen generell unterbunden. Eine zerstörungsfreie Demontage kann nicht stattfinden. Tritt am Elastomerlager bei dieser Konstruktion mit Rasthaken jedoch ein Defekt auf, so ist ein Austausch einzelner Teile nicht möglich. Somit muss das gesamte Bauteil oder die ganze Baugruppe ersetzt werden.

In einer weiteren bekannten Baugruppe dritter Ausführung wird das Elastomerlager nicht durch eine von unten eingesetzte Lagerfixiereinrichtung fixiert, sondern durch einen von oben eingesetzten Kunststofflagerdeckel, der mittels Verschweißen mit dem Topmountgehäuse unlösbar verbunden wird. Wird das Elastomerlager mit einem Deckel von oben her fixiert, so wird der Deckel nur durch aufwärts gerichteten Druck belastet, nicht jedoch durch Zug nach unten. Da häufig die Zug-Drucklasten auf das Elastomerlager wesentlich geringer als die durch den Jouncebumper induzierten Drucklasten sind, wird ein oberhalb des Elastomerlagers angebrachter Deckel weniger nach oben belastet als eine zwischen Jouncebumper und Elastomerlager liegende Trennwand. Dennoch können die mittels einer Verschweißung übertragbaren Kräfte zum Teil erheblich geringer sein, als die in den Betriebslasten auftretenden Spitzenlasten. Zudem kann es zwischen den Bauteilen erhebliche Schwankungen dieser übertragbaren Maximallasten geben.

Aufgabe der Erfindung ist es daher, ein Baugruppe zu schaffen, welche die Probleme des beschriebenen Standes der Technik überwindet, insbesondere derart, dass die Baugruppe eine hinsichtlich der Belastungssituation verbesserte Konstruktion aufweist.

Hauptmerkmale der Erfindung sind im kennzeichnenden Teil von Anspruch 1 angegeben. Ausgestaltungen sind Gegenstand der Ansprüche 2 bis 10.

Erfindungsgemäß wird eine Baugruppe vorgeschlagen, durch welche eine Zentrallängsachse ragt, umfassend ein Gehäuse, umfassend ein erstes Gehäuseteil mit einem ersten Gewinde, welches ein erstes Gewindeprofil umfasst, und ein zweites Gehäuseteil mit einem zweiten Gewinde, welches ein zweites Gewindeprofil umfasst, wobei die Gehäuseteile über die Gewinde unter Ausbildung einer Verschraubung miteinander verschraubt sind, wobei das erste Gewinde ein Außengewinde und das zweite Gewinde ein Innengewinde ist, wobei das erste Gehäuseteil ein Deckel und das zweite Gehäuseteil eine Aufnahme ist, wobei das zweite Gehäuseteil einen Durchbruch an der dem ersten Gehäuseteil gegenüberliegenden Seite aufweist, ausgebildet zum Einführen eines Stoßdämpfers oder dessen Stange.

Die Zentrallängsachse erstreckt sich parallel zu den Verschraubungsrichtungen (Einschraub- und Ausschraubrichtung). Die Angaben "Einschraubrichtung" und "Ausschraubrichtung" können sich auf das erste Gehäuseteil beziehen.

Beispielsweise kann das erste Gehäuseteil in Richtung der Einschraubrichtung in das zweite Gehäuseteil eingeschraubt werden. Dadurch, dass das erste Gehäuseteil als Deckel von der einem Stoßdämpfer oder dessen Stange gegenüberliegenden Seite mit der Aufnahme verschraubt wird, wirken auf den Deckel keine Zugkräfte im Betrieb. Der Deckel kann beispielsweise einen Aufnahmeraum überdecken, die Aufnahme kann beispielsweise diesen Aufnahmeraum ausbilden. Der Durchbruch im zweiten Gehäuseteil kann einen Zugang zum Aufnahmeraum von der dem ersten Gehäuseteil abgewandten Seite eröffnen. Der Durchbruch kann koaxial zu einem Loch eines Einlegers und/oder zur Zentrallängsachse sein. Durch den Durchbruch kann sich ein Stoßdämpfer oder dessen Stange bis in den Aufnahmeraum erstecken, um dort am Einleger fixiert zu werden. Im Aufnahmeraum kann ein elastisches Lager angeordnet sein, welches den Einleger umfassen kann.

Das erste Gehäuseteil kann erfindungsgemäß frei von Zugkräften sein, die über den Stoßdämpfer oder dessen Stange in die Baugruppe eintragbar sind. Es kommt nicht zu Wechsellasten; das erste Gehäuseteil ist vielmehr gegen die Einschraubrichtung belastet. Bei einer solchen Verschraubung kann davon gesprochen werden nicht eine Trennwand, sondern das erste Gehäuseteil, welches als Deckel und/oder als obere Abdeckung einer Aufnahme dienen kann, zu fixen. Es kann daher ein Verschrauben des ersten Gehäuseteils "von oben her" erfolgen. Dort sind die maximal auftretenden Lasten gering. Die Verschraubung ist nicht mit einer dynamischen Wechsellast, sondern vielmehr primär mit einer Last im Druck-Schwellbereich beaufschlagt.

Dadurch, dass das erste Gehäuseteil als Deckel ausgeführt ist und das zweite Gehäuseteil als Aufnahme ausgeführt ist, ist eine Baugruppe geschaffen, bei welcher in Ausschraubrichtung, beispielsweise bezüglich des ersten Gehäuseteils, gerichtete Kräfte am ersten Gehäuseteil und/oder an einem elastischen Lager gering sind, wodurch auch die durch die Betriebslasten zu erwartenden elastischen Verformungen zumindest eines der Gehäuseteile gering ist. Nur bei wenigen Achskonzepten kommt es zu einer Verdrehung des Dämpfers gegenüber seiner Fixierung, die gegebenenfalls im Einbauzustand oberhalb sein kann. Dabei sind die in diese Fixierung oder Anbindung, beispielsweise einem elastischen Lager, eingeleiteten Torsionsmomente nur geringe, da sich die Dämpferstange in der Regel im Prinzip frei im Dämpfer drehen kann. Lediglich durch Reibung im Inneren des Dämpfers können Torsionsmomente bis zur Höhe der Losbrechmomente auftreten und ans elastische Lager weitergeleitet werden. Folglich sind die Deformierungen bei gleichzeitiger torsionaler Lasteinleitung beispielsweise in das erste Gehäuseteil, die gegebenenfalls zu einem ungewollten Lösen der Verschraubung führen können, bei der Erfindung gering.

Gemäß einer Weiterbildung der erfindungsgemäßen Baugruppe kann zumindest eines der Gewindeprofile asymmetrisch ausgestaltet sein und zumindest eines der Gewindeprofile im entsprechenden Gewindegrund entlang eines ersten gedachten Kreises mit erstem Radius und entlang eines davon verschiedenen zweiten gedachten Kreises mit zweitem Radius verlaufen.

In überraschend einfacher Weise können die Probleme des Standes der Technik auch durch die vorgeschlagene Asymmetrie zumindest eines der Gewinde überwunden werden. Die Asymmetrie kann eine Spiegelasymmetrie bezüglich einer Querebene sein (der Normalenvektor der Querebene kann auf der Zentrallängsachse liegen). Mittels der Asymmetrie kann das entsprechende Gewinde nur in einer Richtung entlang der Zentrallängsachse belastet werden. Der durch die Asymmetrie entstehende Bauraum für das jeweils andere Gewinde führt zu einem großen Gewindespiel, wobei der Bauraum bestmöglich ausgenutzt werden kann (Asymmetrie der Gewindeflanken). Zudem hat sich gezeigt, dass die Verschraubung höhere Kräfte als eine Verschraubung mit symmetrischem Standardgewinde übertragen kann.

Statt einer bisherigen Verschweißung können die beiden Gehäuseteile mittels einer Verschraubung fixiert werden, um eine Reparatur der Baugruppe zu ermöglichen, Ferner führt die Asymmetrie in zumindest einem Gewindeprofil dazu, dass eine Biegeverformung eines Gehäuseteils, vorzugsweise des ersten Gehäuseteils, infolge einer entlang der Zentrallängsachse, vorzugsweise entgegen einer Einschraubrichtung, gerichteten Kraft im Bereich der Gewinde nicht zu einer Reduktion der Gewinde-Anpresskräfte führt, sondern die Gewinde werden vielmehr stärker aneinandergepresst.

Gemäß einer denkbaren Weiterbildung der erfindungsgemäßen Baugruppe kann das zweite Gehäuseteil ausgebildet sein und/oder Fixiermittel aufweisen, um an einer festen Struktur, beispielsweise einer Karosserie festgelegt zu werden. Somit kann das zweite Gehäuseteil an einer weiteren Struktur fixiert werden, um die Baugruppe als solche zu fixieren. Das erste Gehäuseteil wiederum kann daher filigraner ausgestaltet sein und lediglich an dem zweiten Gehäuseteil fixiert sein. Denkbar ist, dass das erste Gehäuseteil keine Baugruppenfixierung an einer weiteren festen Struktur umfasst oder ausbildet. Fixiermittel können beispielsweise Bohrungen sein, die von Schrauben durchgriffen werden können.

Gemäß einer denkbaren Weiterbildung der erfindungsgemäßen Baugruppe kann die einer Ausschraubrichtung zugewandte Gewindeflanke des ersten Gewindes an der einer Einschraubrichtung zugewandten Gewindeflanke des zweiten Gewindes anliegen. Dadurch ist ein axiales Gewindespiel auf der in Richtung der Zentrallängsachse gegenüberliegenden Seite des Gewindegangs ausbildbar. Dieses Axialspiel kann die Baugruppe insgesamt elastischer ausbilden. Wird nämlich das erste Gehäuseteil mit einer in Einschraubrichtung gerichteten Kraft beaufschlagt, kann sich dieses Axialspiel schließen, gegebenenfalls gegen eine Kraft eines elastischen Lagers.

Gemäß einer denkbaren Weiterbildung der erfindungsgemäßen Baugruppe kann das zweite Gehäuseteil eine Jouncebumperaufnahme aufweisen, beispielsweise für einen Jouncebumper. Denkbar ist, dass die Baugruppe einen Jouncebumper umfasst, welcher in der Jouncebumperaufnahme des zweiten Gehäuseteils aufgenommen ist. Dadurch kann das erste Gehäuseteil frei von den in die Baugruppe über den Jouncebumper eingetragenen Kräften bleiben. Die Jouncebumperaufnahme kann an der Seite des zweiten Gehäuseteils ausgebildet sein, welche den Durchbruch aufweist.

Gemäß einer denkbaren Weiterbildung der erfindungsgemäßen Baugruppe kann das erste Gehäuseteil ein offener (mit Zentralöffnung oder Durchbruch) oder geschlossener (ohne Zentralöffnung oder Durchbruch) Deckel sein und/oder von der der Jouncebumperaufnahme gegenüberliegenden Seite mit dem zweiten Gehäuseteil verschraubt sein (beispielsweise in Einschraubrichtung). Das erste Gehäuseteil kann dann unbeeinflusst von Jouncebumperkräften sein. Es kommt nicht zu Wechsellasten; das erste Gehäuseteil wird vielmehr, insbesondere bei entsprechender Ausgestaltung und/oder Anordnung, gegen die Einschraubrichtung belastet. Die Verschraubung ist nicht mit einer dynamischen Wechsellast, sondern vielmehr primär mit einer Last im Druck-Schwellbereich beaufschlagt. Auch durch diese einseitige Belastung ist es möglich, die Gewindeflanken asymmetrisch zu gestalten, und auf eine nach oben (beispielsweise in Ausschraubrichtung) gerichtete Belastung des Deckels zu optimieren, um so kritische Zugspannungskonzentrationen am Gewindegrund zu reduzieren und so höhere Kräfte als mit einem symmetrischen Gewinde zu übertragen. Dieses kann insbesondere dann wichtig sein, wenn mindestens eines der Gehäuseteile aus einem Kunststoff hergestellt wird, da die Tragfähigkeit von Kunststoffgewindeflanken durch die geringere Festigkeit von Kunststoff gegenüber Metallen, nicht so hoch ist wie die von Metallen. Da Kunststoffe viskoelastische Eigenschaften haben, kommt es bei Kunststoffen im Laufe der Zeit zu Setz- oder Relaxationserscheinungen. Diese sind um so höher, je höher vor allem die Zugspannungen sind. Mit Vorteil dient die Erfindung daher, um die auftretenden Zugspannungskonzentrationen durch die Asymmetrie zu minimieren, um auch ein Fließen, bzw. Setzen und/oder Relaxieren der Gewindeflanken im Falle eines Kunststoffeinsatzes zu minimieren. Ein offener Deckel ermöglicht nach Verschraubung den Zugriff zum Aufnahmeraum, beispielsweise, um dort die Dämpferstange am Einleger zu fixieren. Ein geschlossener Deckel kann einen Eintritt von Schmutz in den Aufnahmeraum sicher verhindern.

Gemäß einer Weiterbildung der erfindungsgemäßen Baugruppe kann der zweite Radius die 1,1-fache bis 4-fache Länge des ersten Radius betragen, bevorzugt die 1,5-fache bis 3-fache Länge, weiter bevorzugt die 2-fache Länge. Das betroffene Gewindeprofil verläuft somit entlang zumindest zwei unterschiedlicher Radien. Diese Verhältnisse haben sich als besonders vorteilhaft erwiesen bezüglich des Kräfteeintrags und zur Ausbildung einer Asymmetrie im Gewindegrund. Denkbar ist, dass die beiden Gehäuseteile an den Gewindeflanken, die neben den größeren Radien angeordnet sind, aneinander anliegen und/oder auch die Flächen der größeren Radien aneinander anliegen. Die beiden Radien im Gewindegrund sind dabei vorteilhafterweise derart auslegbar, dass derjenige Radius, in den durch die Schraubenvorspannung Zugspannungen induziert werden, größer ist, als derjenige Radius im Gewindegrund, bei welchem durch die Schraubenvorspannung Druckspannungen induziert werden. Wird also die Baugruppe auf Druck belastet, beispielsweise, weil ein mit dem ersten Gehäuseteil verbundenes Bauteil, beispielsweise ein Stoßdämpfer, eine Kraft in Ausschraubrichtung einträgt, kann eine Zugbelastung am entsprechenden Gewinde entstehen. Dort schlägt die Erfindung in vorteilhafter Weise die Anordnung des größeren Durchmessers vor, vorzugsweise zumindest am ersten Gehäuseteil.

Gemäß einer denkbaren Weiterbildung der erfindungsgemäßen Baugruppe kann zumindest eines der Gewindeprofile zumindest eine gerade Gewindeflanke angrenzend an zumindest einen der Kreise aufweisen. Denkbar ist, dass die beiden Radien innerhalb eines Gewindegrundes mittels einer Geraden oder einer Kurve verbunden sind. Dadurch kann eine sehr vorteilhafte Lastenverteilung erfolgen. Denkbar ist, dass die gerade Gewindeflanke diejenige ist, über welche das Gewinde am anderen Gewinde anliegt.

Gemäß einer denkbaren Weiterbildung der erfindungsgemäßen Baugruppe kann innerhalb eines Gewindegrundes der größere Radius einschraubrichtungsabwärts des kleineren Radius angeordnet sein, bevorzugt bei dem ersten Gehäuseteil. Denkbar ist, dass dann im jeweils anderen Gewindegrund der größere Radius ausschraubrichtungsabwärts des kleineren Radius angeordnet sein kann. Dadurch können die Gehäuseteile im Bereich des größeren Radius aneinander anliegen, wodurch sich bei eingetragenen Kräften in Ausschraubrichtung große Anlageflächen zwischen den beiden Gewinden ausbilden lassen. Im Bereich des großen Radius können bei Belastung auch sehr hohe Kräfte aufgenommen werden, insbesondere durch die Asymmetrie des Gewindes.

Gemäß einer Weiterbildung der erfindungsgemäßen Baugruppe können die Gewindeprofile bezüglich einer Querebene zueinander gespiegelte Verläufe aufweisen. Die beiden Gewindeprofile als solche können somit identisch sein, jedoch in entgegengesetzte Richtungen verlaufen. Beispielsweise sind die größeren Radien in den Gewindeprofilen so angeordnet, dass aufgrund der Schraubenvorspannung induzierten Zugspannungen, in den größeren Radien lokalisiert werden, während die Druckspannungen durch die Biegung der Gewindeflanken aufgrund der Schraubenvorspannung in den kleineren Radien lokalisiert sind. Dadurch ist in vorteilhafter Weise eine Verschraubung ausbildbar, die eine höhere Gewindebelastung erlaubt, als es ein symmetrisches Gewinde in der Lage ist.

Gemäß einer denkbaren Weiterbildung der erfindungsgemäßen Baugruppe kann zumindest eines der Gewinde ein rundes Gewinde oder ein Sägengewinde sein. Durch ein rundes Gewinde werden filigrane Kanten vermieden, wobei ein rundes Gewinde nicht zu verwechseln ist mit einem Rundgewinde gemäß der DIN 405. Ein Sägengewinde eignet sich im vorliegenden Fall ganz besonders, da die Baugruppe derart ausbildbar ist, dass das Sägengewinde einseitig oder überwiegend einseitig axiale Belastung erfährt. Somit kann eine Verschraubung ausgebildet werden, die sehr hohe Kräfte aufnehmen kann. Die Verschraubung kann auf Lasten im Druck-Schwellbereich hin optimiert werden. Die Gewindeflanken können folglich asymmetrisch ausgeführt werden. Dies gilt insbesondere für die Erfindung, bei welcher das erste Gehäuseteil als Deckel ausgebildet ist und in Einschraubrichtung mit dem zweiten Gehäuseteil verschraubt ist. Dann ist nämlich der Deckel mit geringen Lasten beaufschlagbar.

Gemäß einer denkbaren Weiterbildung der erfindungsgemäßen Baugruppe kann zumindest eines der Gewindeprofile entlang eines Kreisbogens eine Überdeckung mit dem ersten Kreis im Bereich von 10° bis 135°, bevorzugt im Bereich von 45° bis 100°, weiter bevorzugt von 90° aufweisen und/oder zumindest eines der Gewindeprofile entlang eines Kreisbogens eine Überdeckung mit dem zweiten Kreis im Bereich von 10° bis 90°, bevorzugt im Bereich von 20° bis 60°, weiter bevorzugt von 30° aufweisen. Dadurch sind entsprechend formtreue Gewindeprofile ausbildbar, die über eine große oder kleine Winkelweite dem entsprechenden Kreis folgen. Zudem sind so scharfe Übergänge vermeidbar, die zu Kerbwirkungen führen können.

Gemäß einer Weiterbildung der erfindungsgemäßen Baugruppe kann die erste Ableitung zumindest eines der Gewindeprofile, vorzugsweise beider Gewindeprofile, einen stetigen Verlauf aufweisen. Der Begriff "stetiger Verlauf" ist im mathematischen Sinn zu verstehen. Querschnittlich betrachtet kann das entsprechende Gewindeprofil oder dessen Verlauf als Graf im mathematischen Sinne betrachtet werden, der sich entlang einer X-Achse im X-Y-Koordinatensystem erstrecken kann. Dadurch grenzt sich das entsprechende Gewindeprofil in vorteilhafter Weise von viele üblichen Gewindeprofilen ab, deren Verlauf kantige Übergänge haben. Solche Kanten würden als Sprünge in der 1. mathematischen Ableitung zu sehen sein. Schafe Kanten jedoch sorgen für eine Spannungskonzentration bzw. Kerbwirkung, welche mit einem erfindungsgemäßen Gewindeprofil gar nicht erst auftritt.

Gemäß einer denkbaren Weiterbildung der erfindungsgemäßen Baugruppe können zwei benachbarte Gewindeflanken zumindest eines der Gewinde einen Winkel im Bereich von 10° bis 90°, bevorzugt im Bereich von 30° bis 70° einschließen. Der Flankenwinkel eines Gewindes kann zwischen den einander zugewandten Flanken zweier benachbarter Gewindegänge gemessen werden.

Gemäß einer denkbaren Weiterbildung der erfindungsgemäßen Baugruppe kann zumindest eine der Gewindeflanken mit einer Geraden oder einer Tangenten einer Kopffläche des Gewindes einen Winkel oder zweiten Winkel im Bereich von 90° bis 140°, bevorzugt im Bereich von 100° bis 130°, weiter bevorzugt von 105° einschließen und/oder einen Winkel oder dritten Winkel im Bereich von 90° bis 140°, bevorzugt im Bereich von 100° bis 130°, weiter bevorzugt von 105° einschließen. Diese Maße haben sich als vorteilhaft bezüglich einer Dauerhaltbarkeit erwiesen. Die Gerade kann parallel zur Zentrallängsachse verlaufen; die Tangente kann das Gewindeprofil an der Kopffläche in Längsrichtung mittig tangieren.

Gemäß einer Weiterbildung der erfindungsgemäßen Baugruppe kann sie einen Aufnahmeraum umfassen, in welchem ein elastisches Lager angeordnet ist, wobei das elastische Lager von dem ersten Gehäuseteil und/oder dem zweiten Gehäuseteil vorgespannt ist und/oder sich dort abstützt, wobei vorzugsweise das elastische Lager einen Einleger umfasst. Mittels elastischem Lager kann beispielsweise ein Stoßdämpfer mit der Baugruppe verbunden werden. Das elastische Lager kann ein Elastomerlager sein. Der Einleger kann aus einem Kunststoff oder einem Metall gefertigt sein und/oder ein Loch umfassen, mit welchem der Stoßdämpfer oder dessen Dämpferstange verbindbar ist. Das Loch des Einlegers kann koaxial zur Zentrallängsachse sein. Der Aufnahmeraum kann von dem ersten und/oder zweiten Gehäuseteil begrenzt sein. Das elastische Lager kann einen Elastomerkörper umfassen, welcher den Einleger unmittelbar tragen kann. Alternativ kann das elastische Lager einen Elastomerkörper und einen Tragring umfassen, wobei der Tragring den Einleger trägt und der Elastomerkörper den Tragring unmittelbar trägt. Mittels Tragring, der aus einem Metall oder einem Kunststoff, insbesondere einem thermoplastischen Kunststoff gefertigt sein kann, können die über den Einleger eingetragenen Kräfte großflächig in den Elastomerkörper eingetragen werden. Das Lager kann durch das Verschrauben der beiden Gewinde in axiale Richtung vorgespannt werden. Das Lager kann dabei an beiden Gehäuseteilen anliegen. Die Vorspannung des elastischen Lagers in Radialrichtung kann bereits vor der Verschraubung der beiden Gehäuseteile vorliegen. Dazu kann das elastische Lager in das erste Gehäuseteil eingepresst werden, um dort eine radiale Vorspannung zu erfahren. Eine axiale Vorspannung kann durch die Verschraubung der beiden Gehäuseteile miteinander induziert werden.

Gemäß einer Weiterbildung der erfindungsgemäßen Baugruppe kann das elastische Lager eine Orientierungsstruktur aufweisen, welche mit einer Gegenstruktur in dem ersten und/oder zweiten Gehäuseteil zur Verhinderung einer Rotation in Bezug auf das erste und/oder zweite Gehäuseteil um die Zentrallängsachse zusammenwirken kann. Die Orientierungsstruktur oder Gegenstruktur kann beispielsweise eine Nut oder Feder sein und das jeweils andere von Orientierungsstruktur und Gegenstruktur kann als entsprechendes Gegenstück ausgebildet sein. Denkbar ist, dass das elastische Lager zunächst mit dem ersten Gehäuseteil verbunden, vorzugsweise dort eingepresst wird, wobei dies auch grundsätzlich ohne Orientierungsstruktur möglich ist. Dadurch erfolgt eine Vormontage des Lagers in dem ersten Gehäuseteil vor der Verschraubung der beiden Gehäuseteile. Diese Vormontage kann ferner für das Lager in dem ersten Gehäuseteil bereits vor der Verschraubung der beiden Gehäuseteile eine radiale Kalibrierung ermöglichen. Es ist ferner eine rotatorische Orientierung des elastischen Lages geschaffen, damit das elastische Lager nach der vollendeten Verschraubung der beiden Gehäuseteile gerichtet vorliegt.

Gemäß einer Weiterbildung der erfindungsgemäßen Baugruppe kann das erste Gehäuseteil mindestens ein erstes Rastmittel und das zweite Gehäuseteil mindestens ein zweites Rastmittel umfassen, welche miteinander durch eine Drehbewegung der Gehäuseteile relativ zueinander eine zerstörungsfrei lösbare Verrastung ausbilden. Statt bisheriger Rasthaken, die nicht mehr zerstörungsfrei lösbar sind, ist eine Gewindesicherung vorgeschlagen, welche zwar ein Lösen durch die Betriebslasten verhindert, jedoch ein Aufschrauben im Bedarfsfall ermöglicht. Eines der Rastmittel kann an einer Stirnseite eines der Gehäuseteile, vorzugsweise eines Zylinderabschnitts, und das korrespondierende andere Rastmittel kann an einem Basisabschnitt des anderen Gehäuseteils, vorzugsweise an einem Ringabschnitt, angeordnet sein. Die Rastmittel können form- und/oder kraftschlüssig ineinander eingreifen. Der Formschluss kann durch in zumindest einem der Gehäuseteile vorhandene Elastizitäten hergestellt werden und sich auch wieder lösen.

Gemäß einer denkbaren Weiterbildung der erfindungsgemäßen Baugruppe kann das mindestens erste Rastmittel und/oder das mindestens zweite Rastmittel eine asymmetrische Rampenstruktur mit einer Einschraubschräge und einer Ausschraubschräge umfassen, wobei die Einschraubschräge mit einer Querebene einen kleineren Winkel einschließen kann, als die Ausschraubschräge. Die unterschiedlichen Winkel führen zur Asymmetrie. Mittels flacher Einschraubschräge (kleiner eingeschlossener Winkel) kann somit ein Einschrauben stark vereinfacht sein, ein Ausschrauben mittels steilerer Ausschraubschräge (größerer eingeschlossener Winkel) jedoch erschwert sein. Somit wird eine ausreichende Produktsicherheit und Sicherheit gegen Lösen der Verschraubung gewährleistet.

Gemäß einer denkbaren Weiterbildung der erfindungsgemäßen Baugruppe kann das mindestens erste Rastmittel und/oder das mindestens zweite Rastmittel eine symmetrische Rampenstruktur mit einer Einschraubschräge und einer Ausschraubschräge umfassen, wobei die Einschraubschräge mit einer Querebene einen identischen Winkel einschließt, wie die Ausschraubschräge. Diese Ausführung kann zu gleichen Einschraub- und Ausschraubkräften führen.

Gemäß einer denkbaren Weiterbildung der erfindungsgemäßen Baugruppe kann das mindestens erste Rastmittel und/oder das mindestens zweite Rastmittel eine wellenförmige Rampenstruktur umfassen. Die Wellenstruktur kann asymmetrisch (ungleich steile Wellenseiten) oder symmetrisch sein.

Gemäß einer denkbaren Weiterbildung der erfindungsgemäßen Baugruppe kann zumindest eines der Gehäuseteile aus einem Kunststoff oder einem Metall gefertigt sein. Die Erfindung ist nämlich nicht auf Kunststoff beschränkt. Auch sind metallische Gehäuseteile oder Gehäuseteile aus einem Metall-Kunststoff-Hybrid denkbar. Dadurch kann der erfindungsgemäße Konstruktionsvorteil auch bei Gehäuseteilen aus anderen Materialien verwirklicht werden, um auch von den Vorteilen des jeweiligen Materials zu profitieren. Vorzugsweise kann mindesten eines der Gehäuseteile ein Gussgehäuseteil sein, hergestellt beispielsweise in Aluminiumdruckguss oder Kunststoffspritzguss. Problematisch ist bislang die Übertragung sehr hoher Verschraubungskräfte in einen Kunststoffdeckel, da bei wiederholtem Verschrauben und Lösen die Montageeingriffe für das Schraubwerkzeug in den Deckel Ausschlagen können. Somit sind grundsätzlich geringe Verschraubungskräfte vorteilhaft, wobei dies bislang nicht gleichzeitig mit einem sicheren Betrieb umsetzbar war. Bisher bekannte Deckel wurden im Betrieb mit sehr hohen Kräften belastet. Mittels der Erfindung können jedoch nun geringe Einschraubkräfte verwendet werden, da das erste Gehäuseteil keine großen Kräfte während des Betriebs erfährt. Auch daher eignet sich insbesondere Kunststoff.

Gemäß einer denkbaren Weiterbildung der erfindungsgemäßen Baugruppe kann die Anzahl der Gewindeumläufe zumindest eines der beiden Gewinde größer als 3 sein, bevorzugt größer als 5, weiter bevorzugt größer als 7 sein. Denkbar ist, dass eine Gewindehöhe zumindest eines der beiden Gewinde, also eine Länge des entsprechenden Gewindes entlang der Zentrallängsachse, der Höhe des elastischen Lagers entspricht oder größer ist. Dadurch kann eine über das Lager eingetragene Kraft größtmöglich verteilt werden. Ein Gewindeumlauf erstreckt sich über eine Winkelweite von 360° bezüglich der Zentrallängsachse. Bei der vorteilhaften Innenverschraubung des ersten Gehäuseteils im zweiten Gehäuseteil kann die Anzahl der Gewindeumläufe und damit die tragende Gewindelänge effektiv gesteigert werden. Bei bislang üblichen außen übergreifenden Deckeln mit einem Innengewinde ist das nicht so einfach möglich, da dieses Design einen rotationssymmetrischen Stutzen zur Aufnahme des Lagers erfordert der außenumfangseitig im Bereich des Gewindes nicht an äußere Rippen angebunden werden darf. Diese Randbedingung ist eine häufige und erheblich konstruktive Einschränkung, welche bei der Innenverschraubung des erfindungsgemäßen ersten Gehäuseteils gar nicht auftritt.

Aus einer Kombination des Einschraubens des ersten Gehäuses und einer entsprechenden Anzahl an Gewindeumläufen ergibt sich zudem ein weiterer Vorteil. Durch das Einschrauben kann nämlich das erste Gewinde weit in das zweite Gehäuseteil hineinragen und damit über viele Gewindeumläufe eine Last übertragen. Hierdurch kann ein zum ersten Gehäuseteil gehöriger Zylinderabschnitt lang sein, so das eine Vormontage des Lagers dort möglich ist. Auch hierdurch ist es möglich, das Lager im ersten Gehäuseteil radial vorzuspannen, bevor es die Gehäuseteile verschraubt werden.

Gemäß einer Weiterbildung der erfindungsgemäßen Baugruppe kann das erste Gehäuseteil einen Zylinderabschnitt umfassen, welcher das elastische Lager zumindest teilweise umgreift und/oder das erste Gewinde trägt und/oder einen Flanschabschnitt umfassen, welcher das elastische Lager in Radialrichtung zumindest teilweise übergreift und/oder das elastische Lager in Längsrichtung vorspannt. Hierdurch kann eine Vormontage des elastischen Lagers in das erste Gehäuseteil vor der Verschraubung mit dem zweiten Gehäuseteil vorgenommen werden. Da das erste Gehäuseteil kleiner als das zweite Gehäuseteil sein kann, kann die Montageanlage, insbesondere die Bauteilzuführungen und Bauteilaufspannung, kleiner und damit kostengünstiger ausgeführt werden. Die Vorspannung kann im montierten Zustand vorliegen. Der Zylinderabschnitt kann eine Hohlzylinderabschnitt sein. Der Zylinderabschnitt kann einen Teil des Aufnahmeraums für das Lager ausbilden. In den Zylinderabschnitt kann das Lager eingepresst sein, beispielsweise als Vormontage.

Gemäß einer denkbaren Weiterbildung der erfindungsgemäßen Baugruppe die Länge des Zylinderabschnitts in Längsrichtung der 1,2-fachen bis 0,6-fachen Länge des elastischen Lagers in Längsrichtung im spannungsfreien Vormontagezustand oder Montagezustand betragen, bevorzugt der 1,0-fachen bis 0,8-fachen Länge. Dadurch kann der Zylinderabschnitt weit in das zweite Gehäuseteil eingreifen und/oder eine große Anzahl an Gewindegängen tragen.

Gemäß einer Weiterbildung der erfindungsgemäßen Baugruppe kann das erste Gewinde das elastische Lager zumindest abschnittsweise umfangsseitig überdecken. Das Lager kann einen Elastomerkörper umfassen. Solche Elastomere sind in erster Näherung inkompressibel, so dass bei einer axialen Auslenkung des Einlegers ein Anteil des Elastomerkörpers nach radial außen verdrängt werden kann. Geschieht dieses, so werden die Gewindeflanken nicht nur axial, sondern auch radial weiter aneinandergedrückt. Somit steigt die Haftreibung und ein Lösen der Verschraubung unter axialer Belastung wird weiter erschwert.

Gemäß einer denkbaren Weiterbildung der erfindungsgemäßen Baugruppe kann die Baugruppe ein Topmount, eine Stoßdämpferbefestigung, ein Aggregatlager oder ein Motorlager sein. Die Erfindung ist in vorteilhafter Weise in vielen technischen Kontexten anwendbar.

Gemäß einer denkbaren Weiterbildung der erfindungsgemäßen Baugruppe kann das Lager eine Außenhülse umfassen, welche den Elastomerkörper umfangsseitig umgibt. Die Außenhülse kann aus Kunststoff oder Metall gefertigt sein. Der Elastomerkörper kann an die Außenhülse anvulkanisiert sein. Besteht die Außenhülse aus Metall, so kann hierdurch das Lager vor dem Einpressen, vorzugsweise in das erste Gehäuseteil, radial kalibriert werden, um fertigungsbedingte Schrumpfspannungen aus dem Elastomerkörper zu kompensieren. Ist die Außenhülse hingegen aus Kunststoff, ist das Vorsehen der Orientierungsstruktur in die Außenhülse einfach zu realisieren, jedoch kann dann das Lager nicht vorkalibriert werden. Die Kalibrierung findet dann folglich beim Einpressen des Lagers mit der Kunststoffaußenhülse in das erste Gehäuseteil statt. Das Lager kann über die Außenhülse an dem ersten Gehäuseteil und/oder dem zweiten Gehäuseteil anliegen.

Denkbar ist zudem ein Verfahren zur Montage einer erfindungsgemäßen Baugruppe, umfassend die folgenden Schritte:
- Bereitstellen eines ersten Gehäuseteils nach der Offenbarung,
- Bereitstellen eines zweiten Gehäuseteils nach der Offenbarung,
- Verbinden eines elastischen Lagers nach der Offenbarung mit dem ersten Gehäuseteil, vorzugsweise durch Einpressen des elastischen Lagers in das erste Gehäuseteil,
- Einschrauben des ersten Gehäuseteils in das zweite Gehäuseteil in Einschraubrichtung zur Ausbildung einer Verschraubung.

Die bereits oben bezüglich der Baugruppe beschriebenen Vorteile ergeben sich analog auch für das Verfahren, worauf hiermit verwiesen wird. Die genannten Verfahrensschritte können in der genannten Reihenfolge ablaufen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine Schnittansicht durch eine erfindungsgemäße Baugruppe;

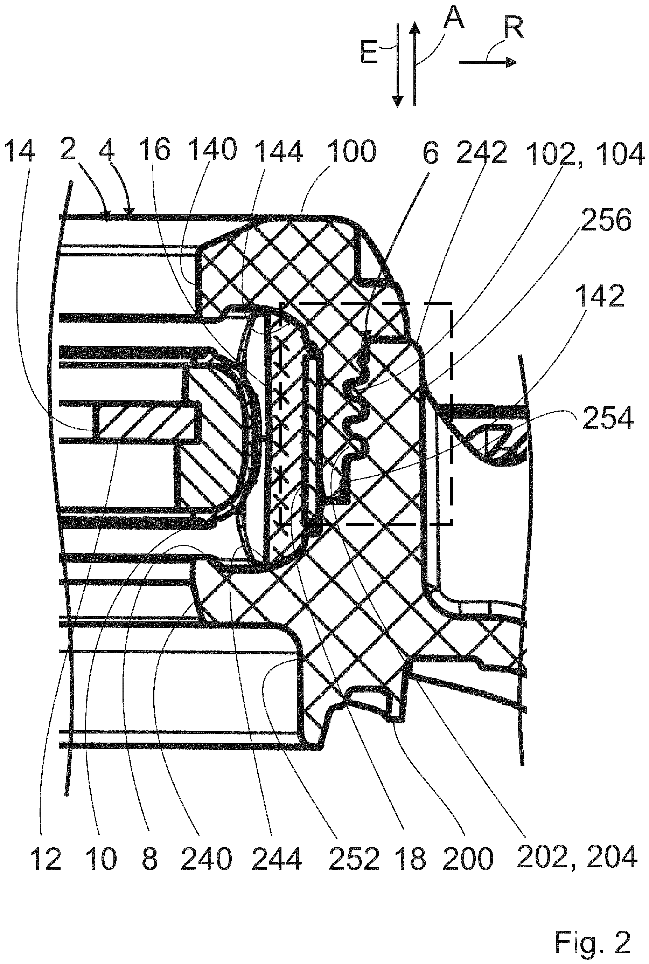

Fig. 2 eine Detailansicht der Baugruppe nach Fig. 1;
Fig. 3 eine Schnittansicht durch einen Teil eines ersten Gehäuseteils;
Fig. 4 eine Schnittansicht durch einen Teil eines zweiten Gehäuseteils;
Fig. 5 eine Detailansicht der Baugruppe nach Fig. 2;
Fig. 6 eine Detailansicht des Teils nach Fig. 3;
Fig. 7 eine Schnittansicht einer ersten Ausführungsform von Rastmitteln;
Fig. 8 eine Schnittansicht einer zweiten Ausführungsform von Rastmitteln;
Fig. 9 eine Schnittansicht einer dritten Ausführungsform von Rastmitteln;
Fig. 10 eine Schnittansicht einer vierten Ausführungsform von Rastmitteln;
Fig. 11 eine Schnittansicht entlang der Linie A-A nach Fig. 1 und
Fig. 12 eine Detailansicht des Ausschnitts nach Fig. 11.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

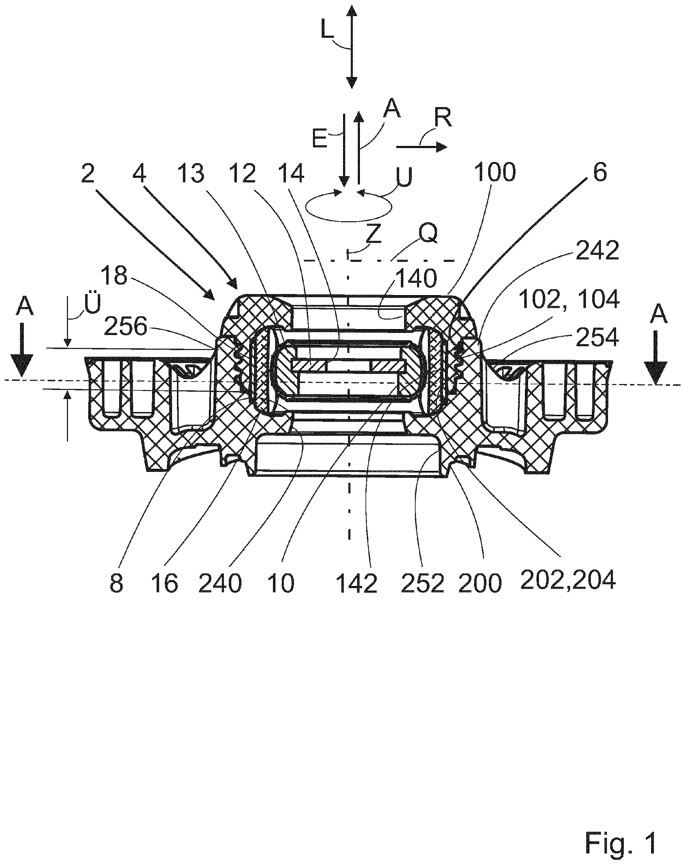

Fig. 1 zeigt eine erfindungsgemäße Baugruppe 2, durch welche eine Zentrallängsachse Z ragt. Ausgehend von der Zentrallängsachse Z erstreckt sich eine Radialrichtung R; um die Zentrallängsachse Z herum erstreckt sich eine Umfangsrichtung U und eine Querebene Q ist derart angeordnet, dass deren Normalenvektor auf der Zentrallängsachse Z liegt. Parallel zur Zentrallängsachse Z verläuft eine Längsrichtung L, die auch als Axialrichtung bezeichnet werden kann.

Die Baugruppe 2 ist als Topmount abgebildet, jedoch nicht darauf beschränkt und umfasst ein Gehäuse 4, welches ein erstes Gehäuseteil 100 und ein zweites Gehäuseteil 200 umfasst. Das erste Gehäuseteil 100 ist als Deckel ausgebildet und das zweite Gehäuseteil 200 ist als Aufnahme ausgebildet. Die Gehäuseteile 100, 200 sind mittels einer Verschraubung 6 miteinander verbunden, wobei die Verschraubung 6 mittels Rastmitteln 114, 214 gesichert ist. In der in Fig. 1 gezeigten Montagestellung begrenzen die Gehäuseteile 100, 200 einen Aufnahmeraum 8.

In dem Aufnahmeraum 8 ist ein elastisches Lager 10 aufgenommen, welches einen Einleger 12 trägt. Das elastische Lager 10 weist außenumfangsseitig eines Elastomerkörpers 16 eine Außenhülse 18 auf. Das Lager 10 liegt über diese Außenhülse 18 an dem ersten Gehäuseteil 100 und dem zweiten Gehäuseteil 200 an. Das elastische Lager 10 weist zudem den Elastomerkörper 16 und einen Tragring 13 auf, der vom Elastomerkörper 16 getragen ist. Der Tragring 13 wiederum trägt den Einleger 12, der ringscheibenartig ausgestaltet sein kann. Mit einem Loch 14 des Einlegers 12 ist ein Stoßdämpfer oder dessen Dämpferstange verbindbar, welche durch den Durchbruch 240 des zweiten Gehäuseteils 200 führen kann. Das erste Gehäuseteil 100 weist einen Durchbruch 140 auf, welcher einen Zugang zum Aufnahmeraum 8 von der dem zweiten Gehäuseteil 200 abgewandten Seite freigibt. Der Durchbruch 140 ist koaxial zum Loch 14 des Einlegers 12 und zur Zentrallängsachse Z ausgerichtet. Das zweite Gehäuseteil 200 weist einen Durchbruch 240 auf, welcher einen Zugang zum Aufnahmeraum 8 von der dem ersten Gehäuseteil 100 abgewandten Seite freigibt oder eröffnet. Der Durchbruch 240 ist koaxial zum Loch 14 des Einlegers 12 und zur Zentrallängsachse Z ausgerichtet. Das zweite Gehäuseteil 200 weist zudem eine Jouncebumperaufnahme 252 für einen nicht dargestellten aber von der Baugruppe 2 grundsätzlich umfassbaren Jouncebumper auf. Die Jouncebumperaufnahme 252 ist an der dem ersten Gehäuseteil 100 abgewandten Seite angeordnet. Die Jouncebumperaufnahme 252 ist koaxial zur Zentrallängsachse Z ausgerichtet. Das zweite Gehäuseteil 200 ist beispielsweise mit einer Karosserie verbindbar.

Das erste Gehäuseteil 100 umfasst ein erstes Gewinde 102 mit einem ersten Gewindeprofil 104 und das zweite Gehäuseteil 200 umfasst ein zweites Gewinde 202 mit einem zweiten Gewindeprofil 204. Zur Ausbildung der Verschraubung 6 sind diese Gewinde 102, 202 in Einschraubrichtung E miteinander verschraubt. Die Ausschraubrichtung A verläuft dazu entgegengesetzt. Die Einschraubrichtung E und die Ausschraubrichtung A verlaufen parallel zur Zentrallängsachse Z. Ersichtlich ist daher, dass das erste Gehäuseteil 100 als Deckel "von oben her", also von der der Jouncebumperaufnahme 252 und/oder dem Stoßdämpfer gegenüberliegenden Seite eingeschraubt ist.

Das erste Gewinde 102 ist außenumfangsseitig als Außengewinde an einem Zylinderabschnitt 142 des ersten Gehäuseteils 100 angeordnet. Der Zylinderabschnitt 142 umgreift das elastische Lager 10 außenumfangsseitig. Das erste Gehäuseteil 100 weist zudem einen innenumfangsseitig angeordneten Flanschabschnitt 144 auf. Der Flanschabschnitt 144 übergreift das elastische Lager 10 in Radialrichtung R und spannt das elastische Lager 10 in Längsrichtung L vor. Dazu stützt sich das elastische Lager 10 einerseits an dem Flanschabschnitt 144 des ersten Gehäuseteil 100 ab. Andererseits stützt sich das elastische Lager 10 an einem Flanschabschnitt 244 des zweiten Gehäuseteils 200 ab. Zwischen den Flanschabschnitten 144, 244 ist das elastische Lager 10 axial vorgespannt.

Erkennbar ist, dass das erste Gewinde 102 und auch das zweite Gewinde 202 das elastische Lager 10 zumindest abschnittsweise umfangsseitig überdecken. Das zweite Gewinde 202 ist innenumfangsseitig als Innengewinde an einem Zylinderabschnitt 242 des zweiten Gehäuseteils 200 angeordnet. Der zweite Zylinderabschnitt 242 umgreift den ersten Zylinderabschnitt 142 außenumfangsseitig. Die Anzahl der Gewindeumläufe der beiden Gewinde 102, 202 beträgt jeweils drei, wobei es durchaus mehr sein können. Außenumfangsseitig sind an den Zylinderabschnitt 242 Rippen 254 zur Aussteifung angebunden, wobei die Rippen 254 einen Anbindungspunkt 256 oder äußeren Anbindungspunkt aufweisen, welcher die höchste Anbindung der jeweiligen Rippe 254 anzeigt. Zwischen diesem Anbindungspunkt 256 und der Stirnseite 148 des ersten Gehäuseteils 100 ist eine Überdeckung Ü ausgebildet. In diesem Bereich überdecken sich die Rippen 254 und der erste Zylinderabschnitt 142.

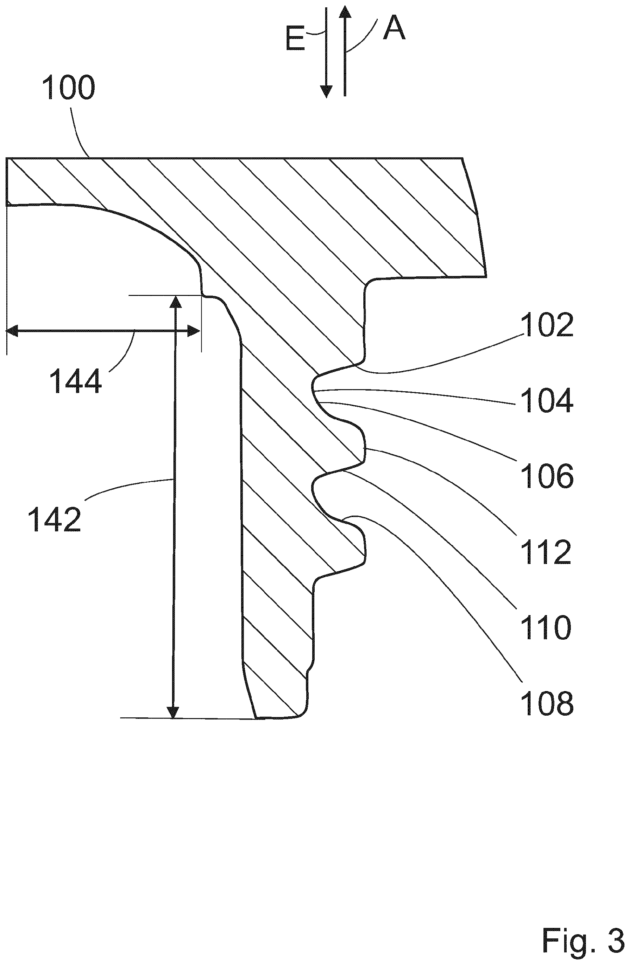

Fig. 3 zeigt einen Abschnitt des ersten Gehäuseteils 100 im Bereich des Gewindes 102. Erkennbar ist, dass das Gewinde 102 mehrere Gewindegründe 106 aufweist. Das erste Gewinde 102 weist zudem Gewindeflanken 108 auf, welche der Einschraubrichtung E zugewandt sind und Gewindeflanken 110 auf, welche der Ausschraubrichtung A zugewandt sind. Das Gewinde 102 weist zudem Kopfflächen 112 auf.

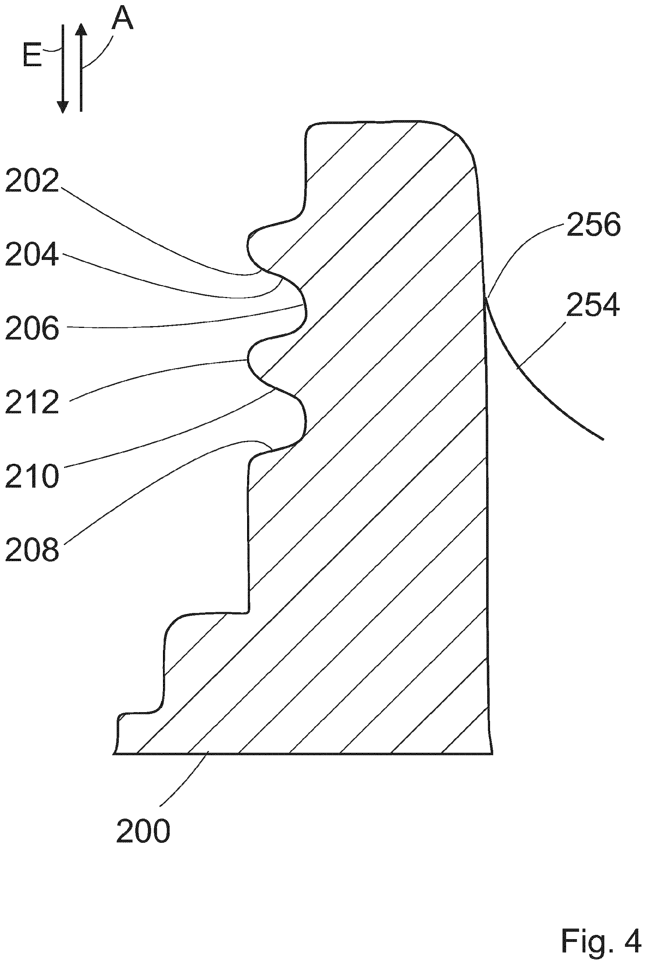

Fig. 4 zeigt einen Abschnitt des zweiten Gehäuseteils 200 im Bereich des Gewindes 202. Erkennbar ist gleichsam, dass das zweite Gewinde 202 mehrere Gewindegründe 206 aufweist. Das zweite Gewinde 202 weist zudem Gewindeflanken 208 auf, welche der Einschraubrichtung E zugewandt sind und Gewindeflanken 210 auf, welche der Ausschraubrichtung A zugewandt sind. Das zweite Gewinde 202 weist zudem Kopfflächen 212 auf. Erkennbar ist auch hier eine exemplarisch dargestellte außenumfangsseitige Rippe 254 und deren Anbindungspunkt 256 am zweiten Zylinderabschnitt 242.

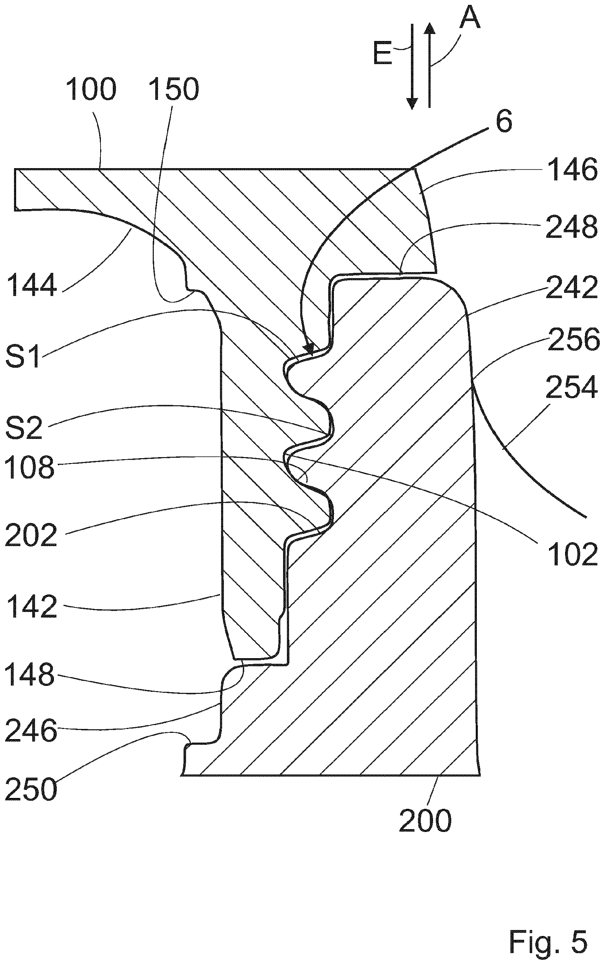

Die Verschraubung 6 ist detailliert in Fig. 5 zu sehen. Die Gewinde 102, 202 sind jeweils als Sägengewinde ausgebildet, wobei die Gewindeprofile 104, 204 bezüglich einer Querebene Q zueinander gespiegelte Verläufe aufweisen. Die beiden Gewindeprofile 104, 204 als solche können somit identisch sein, jedoch verlaufen sie entlang der Zentrallängsachse Z in entgegengesetzte Richtungen. Die der Ausschraubrichtung A zugewandten Gewindeflanken 108 des ersten Gewindes 102 liegen an den der Einschraubrichtung E zugewandten Gewindeflanken 210 des zweiten Gewindes 202 an. Dadurch ist ein axiales Gewindespiel S1 auf der in Richtung der Zentrallängsachse Z gegenüberliegenden Seite des Gewindegangs ausbildbar. Ein radiales Gewindespiel S2 ist zwischen den Gewinde 102, 202 ebenfalls ausbildbar.

Das erste Gehäuseteil 100 weist ein erstes Rastmittel 114 als Rampen- oder Wellenstruktur auf. Dieses kann an einem Ringabschnitt 146, von welchem der Zylinderabschnitt 142 abragt, angeordnet sein und sich in Richtung einer Stirnseite 248 des zweiten Zylinderabschnitts 242 des zweiten Gehäuseteils 200 erstrecken. Alternativ oder zusätzlich kann ein erstes Rastmittel 114 als Rampen- oder Wellenstruktur an einer Stirnseite 148 des ersten Zylinderabschnitts 142 angeordnet sein und sich in Richtung eines zweiten Ringabschnitts 246 des zweiten Gehäuseteils 200 erstrecken. Das erste Rastmittel 114 verrastet in Montagestellung mit einem zweiter Rastmittel 214 als Rastpartner durch eine Drehbewegung der Gehäuseteile 100, 200 relativ zueinander, um eine zerstörungsfrei lösbare Verrastung auszubilden.

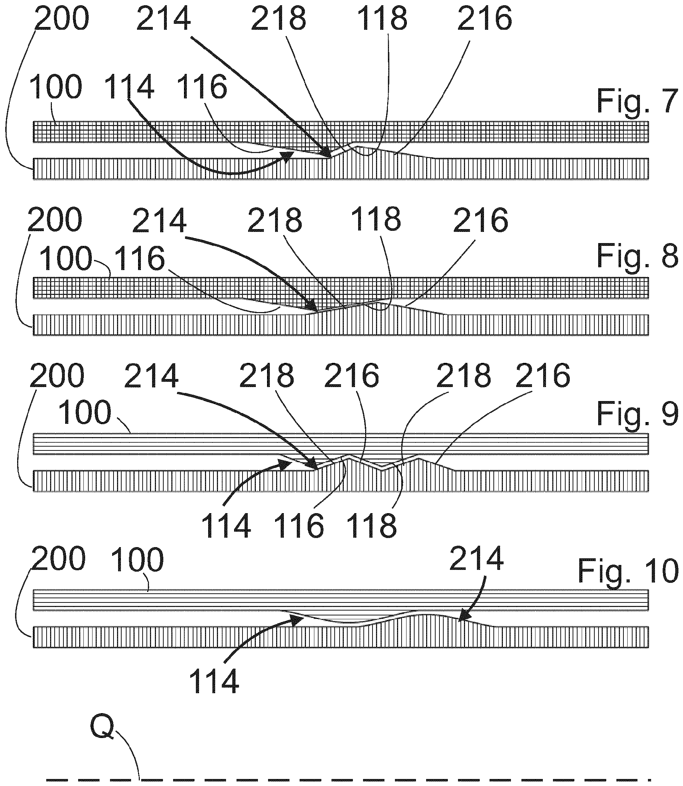

Das zweite Gehäuseteil 200 weist hierzu ein zweites Rastmittel 214 als Rampen- oder Wellenstruktur auf. Dieses kann an dem Ringabschnitt 246, von welchem der zweite Zylinderabschnitt 242 abragt, angeordnet sein und sich in Richtung der ersten Stirnseite 148 des ersten Zylinderabschnitts 142 des ersten Gehäuseteils 100 erstrecken. Alternativ oder zusätzlich kann ein zweites Rastmittel 214 als Rampen- oder Wellenstruktur an der zweiten Stirnseite 248 des zweiten Zylinderabschnitts 242 angeordnet sein und sich in Richtung des ersten Ringabschnitts 146 des ersten Gehäuseteils 100 erstrecken. Die Rastmittel 114, 214 greifen form- und/oder kraftschlüssig ineinander ein. Ausgestaltungen der Rastmittel 114, 214 sind in den Fig. 7 bis 10 gezeigt.

Die Gehäuseteile 100, 200 weisen Schultern 150, 250 im Aufnahmeraum 8 für die Außenhülse 18 auf. Die erste Schulter 150 ist am ersten Gehäuseteil 100 angeordnet und verläuft kreisförmig um die Zentrallängsachse Z herum. Die erste Schulter 150 bildet für die Außenhülse 18 eine Axialbegrenzung und für den Elastomerkörper 16 eine Radialbegrenzung aus. Die zweite Schulter 250 ist am zweiten Gehäuseteil 200 angeordnet und verläuft kreisförmig um die Zentrallängsachse Z herum. Die zweite Schulter 250 bildet gleichsam für die Außenhülse 18 eine Axialbegrenzung und für den Elastomerkörper 16 eine Radialbegrenzung aus.

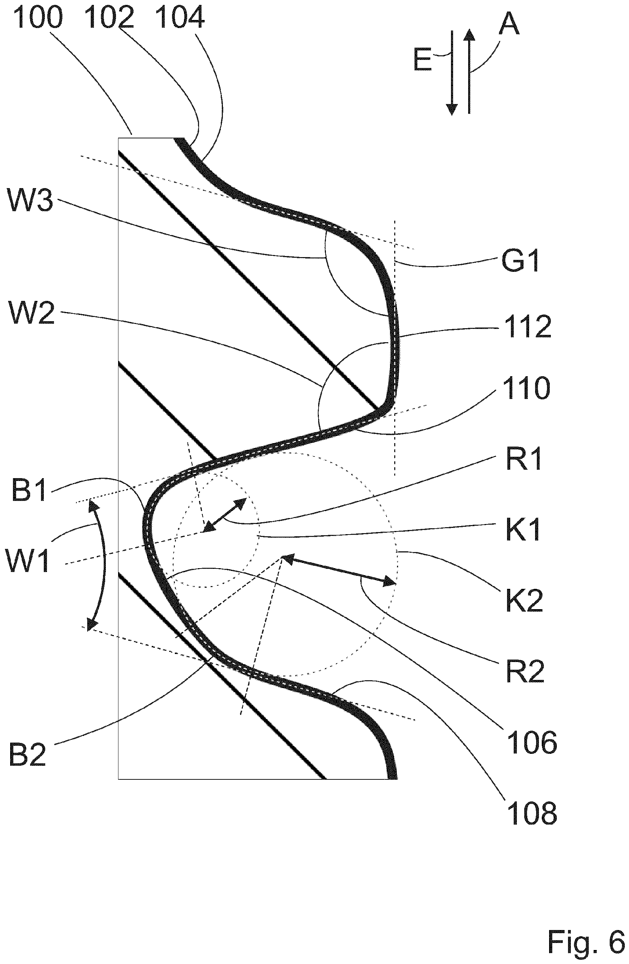

Fig. 6 zeigt anhand eines ersten Gewindegrundes 106 das erste Gewindeprofil 104, welches gleichsam aufgrund der genannten Spiegelung auch für das zweite Gewindeprofil 204 gilt. Das Gewindeprofil 104 ist asymmetrisch bezüglich einer Querebene Q ausgestaltet. Im Gewindegrund 106 verläuft das Gewindeprofil 104 entlang eines ersten gedachten Kreises K1 mit erstem Radius R1 und entlang eines davon verschiedenen zweiten gedachten Kreises K2 mit zweitem Radius R2. Das Gewindeprofil 104 weist entlang eines ersten Kreisbogens B1 eine Überdeckung mit dem ersten Kreis K1 von 95° auf und entlang eines zweiten Kreisbogens B2 eine Überdeckung mit dem zweiten Kreis K2 von 30° auf. Der erste Radius R1 ist kleiner als der zweite Radius R2. Die beiden Radien R1, R2 im Gewindegrund 106 sind dabei derart auslegbar, dass derjenige Radius, an dem beim Anziehen der Gewinde oder bei einem Krafteintrag in Ausschraubrichtung an dem elastischen Lager 10, eine Zugbelastung am Radius entsteht, größer ist, als derjenige Radius im Gewindegrund 106, bei welchem bei der gleichen Belastung Druckspannungen induziert werden. Erkennbar ist zudem, dass innerhalb des Gewindegrundes 106 der größere Radius, also der zweite Radius R2, einschraubrichtungsabwärts des kleineren Radius, also des ersten Radius R1, angeordnet ist. Der Gewindegrund 106 ist in seinen "Eckbereichen" ausgerundet mittels der Radien R1 und R2. Kantige oder spitze Übergänge weist der Gewindegrund 106 nicht auf, weshalb, sofern man das Gewindeprofil 104 als Graf im mathematischen Sinne betrachtet, die erste Ableitung des Gewindeprofils 104 einen stetigen Verlauf und keine Sprünge aufweist. An den ersten Kreis K1 schließt sich die Gewindeflanke 110 als gerade Gewindeflanke angrenzend an. Die Gewindeflanke 110 geht somit gerade in den ersten Kreis K1 über. An den zweiten Kreis K2 schließt sich die Gewindeflanke 108 als gerade Gewindeflanke angrenzend an. Die Gewindeflanke 108 geht somit gerade in den zweiten Kreis K2 über.

Die benachbarten Gewindeflanken 108, 110 schließen miteinander einen ersten Winkel W1 ein, der 30° beträgt. Am Gewindeprofil 106 liegt an der ersten Kopffläche 112 eine Gerade G1 an, die hier auch eine Tangente sein kann. Mit dieser Geraden G1 schließt die Gewindeflanke 110 einen zweiten Winkel W2 von der Größe 100° ein. Mit dieser Geraden G1 schließt die Gewindeflanke 108 einen dritten Winkel W3 von der Größe 110° ein.

Die Fig. 7 bis 10 zeigen unterschiedliche Aspekte von Rastmitteln, wobei diese Aspekte mitunter durchaus verbindbar sind. In Fig. 7 ist zu sehen, dass das erste Rastmittel 114 eine asymmetrische Rampenstruktur (spiegelasymmetrisch bezüglich einer Längsebene) mit einer ersten Einschraubschräge 116 und einer ersten Ausschraubschräge 118 aufweist. Die erste Einschraubschräge 116 schließt mit einer Querebene Q einen kleineren Winkel als die erste Ausschraubschräge 118 ein. Für die Fig. 7 bis 10 ist eine Querebene Q abgebildet. Ebenso ist auch das zweite Rastmittel 214 der Fig. 7 ausgebildet. Eine zweite Einschraubschräge 216 schließt mit einer Querebene Q einen kleineren Winkel als eine zweite Ausschraubschräge 218 ein.

In Fig. 8 sind die Einschraubschrägen 116, 218 spiegelsymmetrisch bezüglich einer Längsebene ausgebildet und schließen mit einer Querebene Q jeweils einen identischen Winkel wie die entsprechenden Ausschraubschrägen 118, 218 ein.

Fig. 9 zeigt, dass jedes Rastmittel 114, 214 auch mehrere Rampenstrukturen aufweisen kann, wobei diese spiegelsymmetrisch und/oder spiegelasymmetrisch sein können.

Fig. 10 zeigt die Rastmittel 114, 214 mit Wellen anstelle von Rampen, wobei auch die einzelnen Wellen spiegelsymmetrisch und/oder spiegelasymmetrisch sein können.

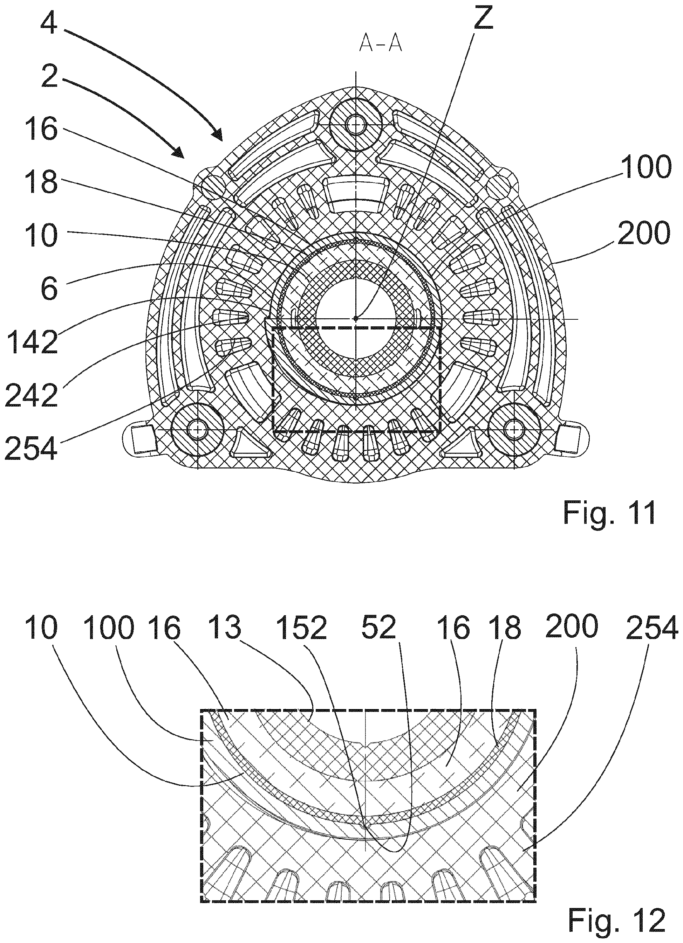

Fig. 11 und 12 zeigt jeweils einen Querschnitt durch die Baugruppe 2 axial unterhalb des Einlegers 12. Dort ist zu sehen, dass die beiden Gehäuseteile 100, 200 via der Verschraubung 6 miteinander verschraubt sind. Das Elastomerlager 10 weist außenumfangsseitig an seiner Außenhülse 18 eine Feder 52 als Orientierungsstruktur auf, welche in eine innenumfangsseitige Nut 152 als Gegenstruktur eingreift. Die Nut 152 ist im Zylinderabschnitt 142 des Gehäuseteils 100 ausgebildet.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Baugruppe | 256 | Anbindungspunkt |
| 4 | Gehäuse | | |
| 6 | Verschraubung | A | Ausschraubrichtung |
| 8 | Aufnahmeraum | B1 | erster Kreisbogen |
| 10 | Elastomerlager | B2 | zweiter Kreisbogen |
| 12 | Einleger | E | Einschraubrichtung |
| 13 | Tragring | G1 | Gerade |
| 14 | Loch | K1 | erster Kreis |
| 16 | Elastomerkörper | K2 | zweiter Kreis |
| 18 | Außenhülse | L | Längsrichtung |
| 52 | Feder | R | Radialrichtung |
| 100 | erstes Gehäuseteil | R1 | erster Radius |
| 102 | erstes Gewinde | R2 | zweiter Radius |
| 104 | erstes Gewindeprofil | S1 | axiales Gewindespiel |
| 106 | erster Gewindegrund | S2 | radiales Gewindespiel |
| 108 | Gewindeflanke | U | Umfangsrichtung |
| 110 | Gewindeflanke | Ü | Überdeckung |
| 112 | erste Kopffläche | Q | Querebene |
| 114 | erstes Rastmittel | W1 | erster Winkel |
| 116 | erste Einschraubschräge | W2 | zweiter Winkel |
| 118 | erste Ausschraubschräge | W3 | dritter Winkel |
| 140 | Durchbruch | Z | Zentrallängsachse |
| 142 | Zylinderabschnitt | | |
| 144 | Flanschabschnitt | | |
| 146 | Ringabschnitt | | |
| 148 | Stirnseite | | |
| 150 | erste Schulter | | |
| 152 | Nut | | |
| 200 | zweites Gehäuseteil | | |
| 202 | zweites Gewinde | | |
| 204 | zweites Gewindeprofil | | |
| 206 | zweiter Gewindegrund | | |
| 208 | Gewindeflanke | | |
| 210 | Gewindeflanke | | |
| 212 | zweite Kopffläche | | |
| 214 | zweites Rastmittel | | |
| 216 | zweite Einschraubschräge | | |
| 118 | zweite Ausschraubschräge | | |
| 240 | Durchbruch | | |
| 242 | Zylinderabschnitt | | |
| 244 | Flanschabschnitt | | |
| 246 | Ringabschnitt | | |
| 248 | Stirnseite | | |
| 250 | zweite Schulter | | |
| 252 | Jouncebumperaufnahme | | |
| 254 | Rippe | | |

## Patentansprüche

1. Baugruppe, durch welche eine Zentrallängsachse (Z) ragt, umfassend
ein Gehäuse (4), umfassend ein erstes Gehäuseteil (100) mit einem ersten Gewinde (102), welches ein erstes Gewindeprofil (104) umfasst, und ein zweites Gehäuseteil (200) mit einem zweiten Gewinde (202), welches ein zweites Gewindeprofil (204) umfasst, wobei die Gehäuseteile (100, 200) über die Gewinde (102, 202) unter Ausbildung einer Verschraubung (6) miteinander verschraubt sind,
**dadurch gekennzeichnet, dass**
das erste Gewinde (102) ein Außengewinde und das zweite Gewinde (202) ein Innengewinde ist, wobei das erste Gehäuseteil (100) ein Deckel und das zweite Gehäuseteil (200) eine Aufnahme ist, wobei das zweite Gehäuseteil (200) einen Durchbruch (240) an der dem ersten Gehäuseteil (100) gegenüberliegenden Seite aufweist, ausgebildet zum Einführen eines Stoßdämpfers oder dessen Stange.

2. Baugruppe nach Anspruch 1, **dadurch gekennzeichnet, dass** zumindest eines der Gewindeprofile (104, 204) asymmetrisch ausgestaltet ist und zumindest eines der Gewindeprofile (104, 204) im entsprechenden Gewindegrund (106, 206) entlang eines ersten gedachten Kreises (K1) mit erstem Radius (R1) und entlang eines davon verschiedenen zweiten gedachten Kreises (K2) mit zweitem Radius (R2) verläuft.

3. Baugruppe nach einem der voranstehenden Ansprüche, **dadurch gekennzeichnet, dass** der zweite Radius (R2) die 1,1-fache bis 4-fache Länge des ersten Radius (R1) beträgt, bevorzugt die 1,5-fache bis 3-fache Länge, weiter bevorzugt die 2-fache Länge.

4. Baugruppe nach einem der voranstehenden Ansprüche, **dadurch gekennzeichnet, dass** die Gewindeprofile (104, 204) bezüglich einer Querebene (Q) zueinander gespiegelte Verläufe aufweisen.

5. Baugruppe nach einem der voranstehenden Ansprüche, **dadurch gekennzeichnet, dass** die erste Ableitung zumindest eines der Gewindeprofile (104, 204) einen stetigen Verlauf aufweist.

6. Baugruppe nach einem der voranstehenden Ansprüche, **dadurch gekennzeichnet, dass** sie einen Aufnahmeraum (8) umfasst, in welchem ein elastisches Lager (10) angeordnet ist, wobei das elastische Lager (10) von dem ersten Gehäuseteil (100) und/oder dem zweiten Gehäuseteil (200) vorgespannt ist und/oder sich dort abstützt, wobei vorzugsweise das elastische Lager (10) einen Einleger (12) umfasst.

7. Baugruppe nach einem der voranstehenden Ansprüche, **dadurch gekennzeichnet, dass** das elastische Lager (10) eine Orientierungsstruktur aufweist, welche mit einer Gegenstruktur in dem ersten und/oder zweiten Gehäuseteil (100, 200) zur Verhinderung einer Rotation in Bezug auf das erste und/oder zweite Gehäuseteil (100, 200) um die Zentrallängsachse (A) zusammenwirkt.

8. Baugruppe nach einem der voranstehenden Ansprüche, **dadurch gekennzeichnet, dass** das erste Gehäuseteil (100) mindestens ein erstes Rastmittel (114) und das zweite Gehäuseteil (200) mindestens ein zweites Rastmittel (214) umfasst, welche miteinander durch eine Drehbewegung der Gehäuseteile (100, 200) relativ zueinander eine zerstörungsfrei lösbare Verrastung ausbilden.

9. Baugruppe nach einem der voranstehenden Ansprüche, **dadurch gekennzeichnet, dass** das erste Gehäuseteil (100) einen Zylinderabschnitt (142) umfasst, welcher das elastische Lager (10) umgreift und/oder das erste Gewinde (102) trägt und/oder einen Flanschabschnitt (144) umfasst, welcher das elastische Lager (10) in Radialrichtung (R) übergreift und/oder das elastische Lager (10) in Längsrichtung (L) vorspannt.

10. Baugruppe nach einem der voranstehenden Ansprüche, **dadurch gekennzeichnet, dass** das erste Gewinde (102) das elastische Lager (10) zumindest abschnittsweise umfangsseitig überdeckt.
